Europäisches Patentamt

European Patent Office

Office européen des brevets

(19)

(11) Veröffentlichungsnummer: **0 502 461 A1**

# (12) EUROPÄISCHE PATENTANMELDUNG

(21) Anmeldenummer: **92103571.3**

(22) Anmeldetag: **02.03.92**

(51) Int. Cl.5: **B24C 9/00**

(30) Priorität: **04.03.91 DE 4106831**

(43) Veröffentlichungstag der Anmeldung:
**09.09.92 Patentblatt 92/37**

(84) Benannte Vertragsstaaten:
**AT CH ES FR GB IT LI PT SE**

(71) Anmelder: **FORACON MASCHINEN- UND ANLAGEN GmbH**
**Wilhelmstrasse 39**
**W-7518 Bretten(DE)**

(72) Erfinder: **Doll, Friedbert**
**Schillerstrasse 5**
**W-7519 Zaisenhausen(DE)**

(74) Vertreter: **Meyer-Roxlau, Reiner Ferdinand, Dipl.-Ing.**
**Anwaltskanzlei Wey & Partner**
**Widenmeyerstrasse 49**
**W-8000 München 22(DE)**

(54) **Verfahren und Anlage zur Rückgewinnung abrasiven Schleifmaterials beim Wasserstrahl-Schneiden.**

(57) Die Erfindung betrifft ein Verfahren zur Rückgewinnung abrasiver Schleifmaterialien aus der Schleifmaterial/Wasserstrahl-Auffangwanne einer Wasserstrahl-Schneideinrichtung und eine zugehörige Anlage. Dabei wird zunächst das am Wannenboden abgesetzte Schleifmaterial horizontal in eine Anhebeposition transportiert und von dort nach oben aus der Wanne herausgehoben und das aus der Wanne herausgehobene Schleifmaterial anschließend einer Trocknung unterzogen, wonach das getrocknete Schleifmaterial in einem Luftstrom suspendiert und schließlich aus diesem in unterschiedlichen Größenfraktionen abgeschieden gesammelt wird.

Die Erfindung betrifft einerseits ein Verfahren und andererseits eine zugehörige Anlage zur Rückgewinnung abrasiver Schleifmaterialien aus der Schleifmaterial/Wasserstrahl-Auffangwanne einer Wasserstrahl-Schneideinrichtung gemäß Oberbegriff des Anspruchs 1 bzw. 4.

Um harte Materialien wie bspw. Stein, Marmor, Glas, Aluminium, Stahl, Eisen usw. wasserstrahlschneiden zu können, muß dem Wasserstrahl ein Schleifmaterial zugesetzt werden. Die Zugabe erfolgt nach dem Venturiprinzip. Das Schleifmaterial besteht zumindest in der Regel aus Naturprodukten wie z.B. Granat, Olivin, Kupferschlacke, und ist entsprechend feinkörnig aufgemahlen. Zum Wasserstrahl-Schneiden der genannten Materialien werden je nach deren Art 0 bis zu 500 g/min Schleifmaterial benötigt. Bisher wird das Schleifmaterial nach dem Schneiden in der Regel manuell andererseits aber auch bereits automatisch aus der Auffangwanne entfernt. Das so entfernte Schleifmaterial wird anschließend einer Entsorgung zugeführt und ist nicht wiederverwendbar. Im übrigen ist das Schleifmaterial nach dem Schneiden mit Partikeln des geschnittenen Materials versetzt.

Die Entsorgung des Schleifmaterials ist naturgemäß mit besonderen Kosten verbunden, und die vollständige Entsorgung des gesamten eingesetzten Schleifmaterials macht einen fortlaufend hohen Bedarf an frischem Schleifmaterial erforderlich, so daß das Wasserstrahl-Schneiden mit nicht unerheblichen Kosten aus der Sicht des Schleifmaterials verbunden ist.

Der Erfindung liegt daher die Aufgabe zugrunde, Verfahren und Anlage der jeweils eingangs bezeichneten Gattung so auszubilden, daß das Wasserstrahl-Schneiden unter dem Aspekt des einzusetzenden Schleifmaterials preiswerter ausführbar ist und die Umweltbelastung durch Entsorgung verbrauchten Schleifmaterials auf ein Minimum reduziert wird.

Diese Aufgabe wird in verfahrens- bzw. vorrichtungstechnischer Hinsicht durch die Merkmale des kennzeichnenden Teils des Anspruchs 1 bzw. 4 gelöst.

Vorteilhafte Weiterbildungen sind in verfahrens- bzw. vorrichtungstechnischer Hinsicht aus den Unteransprüchen 2 und 3 bzw. 5 bis 11 zu ersehen.

Die erfindungsgemäße Verfahrensausbildung bietet die Möglichkeit zur fortlaufenden automatischen Rückgewinnung der abrasiven Schleifmaterialien und zu deren nochmaligen Verwendung beim weiteren Schneiden, wobei durch die größenmäßige Fraktions-Abscheidung der Schleifmaterialien aus dem Suspensions-Luftstrom die Möglichkeit geschaffen ist, die feinste Fraktion so einzustellen, daß sie nur nicht nochmal verwendbare Materialien sowie die beim Schneiden angefallenen Partikel des geschnittenen Materials enthält, die der Entsorgung zuzuführen sind, während die anderen Fraktionen in der Partikelgröße gröber klassierte Schleifmaterialien enthalten. Diese weiteren Fraktionen lassen sich bei entsprechender mengenmäßigen Vermischung frischem Schleifmaterial beimischen mit der Folge, daß insgesamt eine Schleifmaterialzusammensetzung erreicht ist, die für das Schneiden brauchbar ist. Durch die erfindungsgemäße Verfahrensweise werden mehr als 50% der Schleifmaterialien rückgewonnen.

Im übrigen ist der Transport der am Wannenboden abgesetzten Schleifmaterialien in die Anhebeposition zweckmäßigerweise zyklisch auszuführen und sollte der Suspensions-Luftstrom im Bereich der Abscheidung der unterschiedlichen Größenfraktionen schräg nach oben zwangsgeführt sein, um so die Abscheidung unterschiedlicher Größenfraktionen zu erleichtern.

Für die bei der erfindungsgemäßen Anlage vorgesehenen diversen Transporteinrichtungen kann insgesamt anstelle verschiedener Transporteinrichtungen eine einheitlich durchgehende Transporteinrichtung in der Form eines Endlosförderers vorgesehen werden, der in Teilbereichen zunächst horizontal, dann schräg nach oben und schließlich wieder horizontal geführt ist.

Auch sollte wie bereits für den Suspensions-Luftstrom oben angegeben der zugehörige Luftstrom-Sortierkanal mindestens im Bereich ihrer nach unten gerichteten Austrittsöffnungen schräg nach oben geführt sein. Die Austrittsöffnungen sollten dabei so in dem Sortierkanal angeordnet sein, daß eine jeweils gewünschte Größenfraktion aus dem Sortierkanal abführbar ist. Dies bedeutet, daß die kleinsten Partikel einer bestimmten Größenfraktion für die Anordnung der zugehörigen Austrittsöffnung verantwortlich sind, während die größten Partikel derselben Größenfraktion für die Anordnung der Austrittsöffnungen der nächst gröberen Fraktion bestimmend sind.

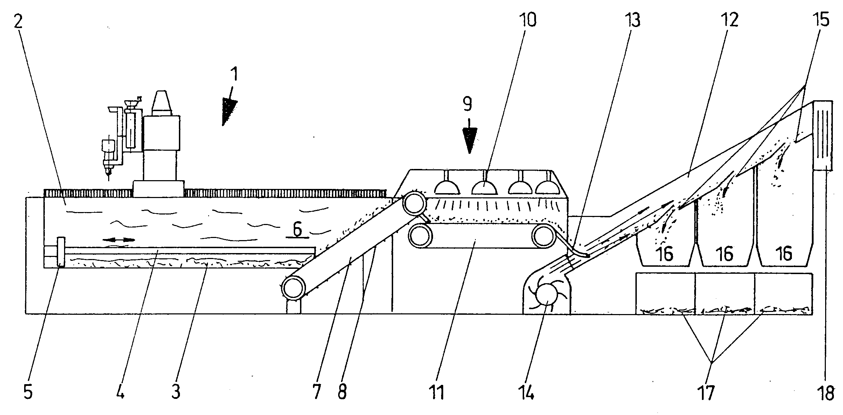

Nachfolgend wird die Erfindung weiter ins Einzelne gehend und ausschließlich beispielhaft unter Bezugnahme auf die Zeichnung beschrieben.

Die einzige Figur zeigt eine erfindungsgemäße Anlage schematisch in einem vertikalen Längsschnitt.

Zu einer insgesamt mit 1 bezeichneten herkömmlichen Wasserstrahl-Schneideinrichtung gehört eine Wanne 2 zum Auffangen des Wasserstrahls und des diesem beigemischten Schleifmaterials. Zur Verhinderung von Beschädigungen der Wanne 2 durch die nach dem Schneiden im Wasserstrahl noch enthaltene Restenergie muß in der Wanne ein verhältnismäßig hoher Wasserstand aufrechterhalten werden. Das in dem in der Wanne 2 befindlichen Wasser enthaltene Schleifmaterial setzt sich schließlich unter der Einwirkung seines im Vergleich zu Wasser höheren spezifischen Gewichts am Wannenboden 3 ab.

Zur Abführung des abgesetzten Schleifmaterials dient eine beim dargestellten Ausführungsbeispiel als Schiebereinrichtung 4 ausgebildete, im wesentlichen horizontale Transporteinrichtung, die mit ihrem Schieber 5 das am Wannenboden 3 abgesetzte Schleifmaterial bei der zeichnerischen Darstellung von links nach rechts zu einer dort befindlichen Anhebeposition 6 transportiert.

In der Anhebeposition 6 schließt an die Schiebereinrichtung 4 eine Hebeeinrichtung 7, im dargestellten Fall in der Form eines Endlosförderers mit auf dem Förderband angeordneten Mitnehmern 8, an, die das nach rechts transportierte Schleifmaterial übernimmt und schräg nach oben aus der Wanne 2 herausführt.

Abgabeseitig schließt an die Hebeeinrichtung 7 eine Trocknungsstation 9 an, innerhalb der unterhalb einer Reihe von UV-Strahlern 10 eine Transporteinrichtung 11, im dargestellten Fall in der Form eines Endlosförderers, vorgesehen ist. Mittels dessen wird das aus der Wanne 2 nach oben herausgeführte Schleifmaterial unter den Strahlern 10 hindurchgeführt und dabei mittels der auf das Material einwirkenden Wärme getrocknet.

Anstelle der UV-Strahlungs-Trocknung kann selbstverständlich auch eine anderweitige Trocknungsmethode zum Einsatz kommen, also bspw. eine Trocknung mit Hilfe von Heißluft.

Anstelle von drei einzelnen Fördereinrichtungen 4, 7 , 11 kann selbstverständlich auch ein entsprechend geführter einzelner Endlosförderer zum Einsatz kommen.

Hinter der Trocknungsstation 9 schließt an die Transporteinrichtung 11 ein im dargestellten Fall von unten links schräg nach oben rechts geführte Sortierkanal 12 zur Zwangsführung eines Luftstroms an. Das von der Transporteinrichtung 11 abgeführte getrocknete Schleifmaterial wird dabei über eine Rutsche 13 in das Innere des Sortierkanals 12 eingeführt, an deren einem Ende ein Druckluftgebläse 14 angeordnet ist. Dieses dient zur Erzeugung eines Luftstroms, in dem das getrocknete Schleifmaterial suspendiert wird. Je nach Größe der Einzelpartikel des Schleifmaterials wird dies von dem Suspensions-Luftstrom mehr oder weniger weit mitgerissen, bis es von dem Luftstrom nicht mehr weiter getragen werden kann, aus diesem herausfällt und damit abgeschieden wird. Die auftretenden unterschiedlichen Größen der Schleifmaterialpartikel lassen sich zu bestimmten Größenklassen bzw. -fraktionen zusammenfassen. Da aufgrund der durch das Druckluftgebläse 14 in dem Sortierkanal 12 bewirkten Strömungsverhältnisse bekannt ist, in welchem Bereich des Sortierkanals 12 bestimmte Größenfraktionen des Schleifmaterials abgeschieden werden, sind in dem Sortierkanal 12 an einfach zu bestimmenden Stellen nach unten gerichtete Austrittsöffnungen 15 für jeweils eine Größenfraktion vorgesehen. Diese Austrittsöffnungen 15 münden jeweils in ein Sammelrohr 16, dem eine Auffangbehälter 17 zugeordnet ist. Jeder Auffangbehälter 17 enthält also eine hinsichtlich ihrer Größe andere Fraktion des getrockneten Schleifmaterials.

An dem dem Druckgebläse 14 gegenüberliegenden Ende des Sortierkanals 12 ist eine Filtereinrichtung 18 zur Staubabscheidung vorgesehen, damit die dort austretende Luft zu keiner Umweltverschmutzung führt.

Die Austrittsöffnung des Sortierkanals 12 für die in ihrer Partikelgröße feinste Fraktion ist so an dem Sortierkanal 12 angeordnet, daß die dort austretende Fraktion nur Schleifmaterialpartikel, deren nochmalige Verwendung zu keinem Ergebnis führen würde, und durch das Wassserstrahl-Schneiden zu Mehlfeinheit zermahlene Partikel des geschnittenen Materials enthält. Ausschließlich diese Fraktion ist dann der Entsorgung zuzuführen. Die übrigen Fraktionen werden in geeigneten Verhältnissen miteinander und mit einem Anteil frischen Schleifmaterials derart vermischt, daß sich die ergebende Gesamtheit für den jeweils durchzuführenden Schneidvorgang eignet.

Versuche haben gezeigt, daß durch die erfindungsgemäße Verfahrensweise weit mehr als 50% des ursprünglich eingesetzten Schleifmaterials einer neuerlichen Verwendung zuführbar sind.

**Patentansprüche**

1. Verfahren zur Rückgewinnung abrasiver Schleifmaterialien aus der Schleifmaterial/Wasserstrahl-Auffangwanne einer Wasserstrahl-Schneideinrichtung, indem zunächst das am Wannenboden abgesetzte Schleifmaterial im wesentlichen horizontal in eine Anhebeposition innerhalb der Wanne transportiert und, von dort nach oben aus der Wanne herausgehoben wird, **dadurch gekennzeichnet,** daß das aus der Wanne herausgehobene Schleifmaterial anschließend einer Trocknung unterzogen wird, wonach das getrocknete Schleifmaterial in einem Luftstrom suspendiert und schließlich aus diesem in unterschiedlichen Größenfraktionen abgeschieden wird, die je separat gesammelt werden.

2. Verfahren nach Anspruch 1, **dadurch gekennzeichnet,** daß der Suspensions-Luftstrom mindestens im Bereich der Abscheidung der unterschiedlichen Größenfraktionen schräg nach oben zwangsgeführt wird.

3. Verfahren nach Anspruch 1 oder 2, **dadurch gekennzeichnet,** daß das am Wannenboden abgesetzte Schleifmaterial zyklisch in die Anhebeposition transportiert wird.

4. Anlage zur Rückgewinnung abrasiver Schleifmaterialien aus der Schleifmaterial/Wasserstrahl-Auffangwanne einer Wasserstrahl-Schneideinrichtung, zur Durchführung des Verfahrens nach mindestens einem der vorhergehenden Ansprüche, wobei in der Wanne eine im wesentlichen horizontale Trans-porteinrichtung angeordnet ist, mit der das abgesetzte Schleifmaterial einer Anhebeposition innerhalb der Wanne zuführbar ist, und wobei in der Anhebeposition eine Hebeeinrichtung vorgesehen ist, mittels der das von der Transporteinrichtung herbeigeführte Schleifmaterial nach oben aus der Wanne herausführbar ist, **dadurch gekennzeichnet, daß** an die Abgabeseite der Hebeeinrichtung (7) eine Trocknungsstation (9) mit Fördereinrichtung (11) für das Schleifmaterial anschließt, hinter der zur Übernahme des getrockneten Schleifmaterials ein Sortierkanal (12) vorgesehen ist, an dessen einen Ende ein Druckluftgebläse (14) angeordnet ist und der in unterschiedlichen Abständen von letzterem nach unten gerichtete Austrittsöffnungen (15) aufweist.

5. Anlage nach Anspruch 4, **dadurch gekennzeichnet,** daß in der Trocknungsstation (9) UV-Strahler (10) bzw. Heizstäbe etc. als Wärmespender vorgesehen sind.

6. Anlage nach Anspruch 4 oder 5, **dadurch gekennzeichnet,** daß die Fördereinrichtung (11) der Trocknungsstation (9) als Endlosförderer ausgebildet ist.

7. Anlage nach mindestens einem der Ansprüche 4 bis 6, **dadurch gekennzeichnet,** daß alle Fördermittel (4, 7, 11) gemeinsam als einheitlicher Endlosförderer ausgebildet sind.

8. Anlage nach mindestens einem der Ansprüche 4 bis 7, **dadurch gekennzeichnet,** daß der Luftstrom-Sortierkanal (12) mindestens im Bereich seiner nach unten gerichteten Austrittsöffnungen (15) schräg nach oben geführt ist.

9. Anlage nach mindestens einem der Ansprüche 4 bis 8, **dadurch gekennzeichnet,** daß an dem dem Druckluftgebläse (14) abgewandten Ende des Luftstrom-Sortierkanals (12) ein Staubabscheider (18) angeordnet ist.

10. Anlage nach mindestens einem der Ansprüche 4 bis 9, **dadurch gekennzeichnet,** daß die im wesentlichen horizontale Transporteinrichtung (4) innerhalb der Wanne (2) als Schiebereinrichtung ausgebildet ist.

11. Anlage nach mindestens einem der Ansprüche 4 bis 10, **dadurch gekennzeichnet,** daß die Hebeeinrichtung (7) als Endlosförderer mit Mitnehmern (8) ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 158 743 (ERNST SCHMUTZ GMBH) <br> * Anspruch 1 * | 1 | B24C9/00 |
| Y | --- | 2-4,8-11 | |
| Y | US-A-2 696 910 (LJUNGDELL ET AL) <br> * Abbildung 1 * <br> --- | 2,4,8-11 | |
| Y | US-A-4 524 550 (BURKE ET AL) <br> * das ganze Dokument * <br> --- | 3 | |
| A | CH-A-454 662 (BADISCHE MASCHINENFABRIK GMBH) <br> * Abbildungen 1-3 * <br> --- | 1-3,8,10 | |
| A | US-A-3 934 374 (LELIAERT) <br> * Abbildung 2 * <br> --- | 1,3,9-11 | |
| A | DE-C-238 924 (ALFRED GUTMANN A.G. FÜR MASCHINENBAU) <br> * Seite 1, Zeile 42 - Zeile 54 * <br> --- | 1-3,8-10 | |
| A | US-A-4 044 507 (COX ET AL) <br> * Zusammenfassung; Abbildung 1 * <br> --- | 1,7,11 | **RECHERCHIERTE SACHGEBIETE (Int. Cl.5)** |
| A | DE-U-8 914 626 (ALFRED KÄRCHER GMBH & CO.) <br> * Anspruch 1; Abbildung * <br> --- | 1 | B24C |
| A | US-A-4 877 190 (LINEBACK) <br> * Anspruch 1 * <br> ----- | 5 | |

Der vorliegende Recherchenbericht wurde für alle Patentansprüche erstellt

| Recherchenort | Abschlußdatum der Recherche | Prüfer |
|---|---|---|
| DEN HAAG | 18 JUNI 1992 | CARMICHAEL D.G. |